# EUROPÄISCHE PATENTSCHRIFT

(11) **EP 0 410 092 B1**
(45) Veröffentlichungstag und Bekanntmachung des Hinweises auf die Patenterteilung: **19.01.1994**
(21) Anmeldenummer: 90109173.6
(22) Anmeldetag: 16.05.1990
(51) Int. Cl.: F23Q 7/00

(54) **Zigarettenanzünder**
Cigarette lighter
Allume-cigarettes

(30) Priorität: 25.07.1989 DE 3924560
(43) Veröffentlichungstag der Anmeldung: 30.01.1991
(73) Patentinhaber: Gebr. Happich GmbH, D-42097 Wuppertal (DE)
(72) Erfinder: Dietz, Günther, D-5600 Wuppertal 1 (DE); Dabringhaus, Volker, D-5600 Wuppertal 1 (DE); Wegel, Peter, D-5600 Wuppertal 2 (DE)

(56) Entgegenhaltungen:
- US-A- 2 244 233
- US-A- 2 310 029

## Beschreibung

Die Erfindung bezieht sich auf einen Zigarettenanzünder, insbesondere für Fahrzeuge, mit einem Einsatz für eine Hülse, der einendig einen Betätigungsknopf und anderendig einen Heizkörper aufweist, welcher durch eine Drehbewegung des Betätigungsknopfes in eine Raststellung, in der ein elektrisches Aufheizen desselben erfolgt, überführbar und entgegen der Wirkung einer Rückholfeder durch eine Bimetallfeder während deren Wirkzeit gehalten ist.

Bei üblichen elektrischen Zigarettenanzündern der gattungsgemäßen Art, wird im allgemeinen der unter Federdruck stehende Heizkörper von außen mittels des Betätigungsknopfes eingedrückt, wodurch elektrischer Stromschluß entsteht. Die Ausschaltung wird durch eine Bimetallfeder erreicht, wenn das Aufheizen des Heizkörpers beendet ist.

Es hat sich gezeigt, daß das Eindrücken des Betätigungsknopfes eine nicht immer befriedigende Handhabung ist. So haben schon manche Personen darüber geklagt, daß die Benutzung des Zigarettenanzünders sehr leicht zu abgebrochenen Fingernägeln führen kann. Ein anderes weiteres Übel ergibt sich bei durch Eindrücken zu betätigenden Zigarettenanzündern insbesondere auch dann, wenn diese in Fahrzeug-Schubaschern installiert sind und dabei die Eindrückrichtung noch mit der Schubrichtung des Aschers weitgehend zusammenfällt. Dann kann es nämlich sehr leicht geschehen, daß anstelle des Ingangsetzens des Zigarettenanzünders die Ascherschublade geschlossen wird, wobei es - wie die Praxis gezeigt hat - auch noch dazu kommen kann, daß sich der Zigarettenanzünder-Benutzer die Finger einklemmt.

In der US-A- 2 310 029 ist ein Zigarettenanzünder gezeigt, bei dem ein Thermoschalter mit Bimetallstreifen und mit Rückstellfedern versehen ist. Der Heizkörper wird so lange von Kontaktfingern gehalten, bis der Anzünderstecker aus der Anzündersteckdose herausgezogen wird.

Der vorliegenden Erfindung liegt nun die Aufgabe zugrunde, einen Zigarettenanzünder der eingangs genannten Art hinsichtlich seiner Betätigungshandhabung zu verbessern.

Gelöst wird diese Aufgabe erfindungsgemäß dadurch, daß die Drehbewegung des Betätigungsknopfes auf eine mit diesem drehfest jedoch axial verschiebbar verbundenen, am freien Ende den Heizkörper tragenden Achse übertragbar ist, die ihrerseits mit Mitteln zusammenwirkt, die eine Axialverschiebung der Achse ermöglichen.

Durch diese erfindungsgemäße Maßnahme wird vorteilhafterweise die Gefahr, daß beim Betätigen des Zigarettenanzünders die Fingernägel abbrechen können, wesentlich gemindert. Auch kann es nun nicht mehr dazu kommen, daß beim Betätigen des Zigarettenanzünders die Ascherlade ungewollt geschlossen wird, so daß der Benutzer des Zigarettenanzünders auch nicht mehr befürchten muß, sich dabei die Finger einklemmen zu können. Darüber hinaus ergibt sich durch die Erfindung eine Bauhöhenreduzierung im Vergleich zu herkömmlichen Vorbildern. Auch können wesentliche Funktionsteile herkömmlicher Zigarettenanzünder, wie elektrische Stromzuführung und -versorgung sowie Rast- und Auslösermittel für den Einsatz praktisch Baugleich beibehalten werden, so daß insoweit beim erfindungsgemäßen Zigarettenanzünder auf bewährte Mittel und Bauteile zurückgegriffen werden kann.

Gemäß einer bevorzugten Ausgestaltung der Erfindung können als Mittel zur Axialverschiebung der Achse zwei Formkörper mit aufeinanderliegenden, rampenförmigen Erhöhungen vorgesehen sein, von denen der eine starr mit der Achse und der andere starr mit dem Zylinder verbunden ist. Die Drehbewegung des Betätigungsknopfes wird somit über eine schiefe Ebene in eine Axialbewegung der das Heizelement tragenden Achse umgewandelt. Da jeder Schraubengang bekanntlich eine gewundene schiefe Ebene darstellt, läßt sich die Erfindung auch dann verwirklichen, wenn mit einem Gewinde, vorzugsweise Steilgewinde gearbeitet wird; denn wesentlich ist, daß durch eine Drehbewegung des Betätigungsknopfes eine Verstellung des Heizkörpers bis in die Raststellung erfolgt.

Damit sich der Zylinder beim Bedienen des Betätigungsknopfes nicht etwa mitdreht, ist derselbe in einem dem Betätigungsknopf drehbeweglich lagernden Ringgehäuse drehfest angeordnet, welches kraft- oder formschlüssig mit einem Bund der Hülse kuppelbar ist.

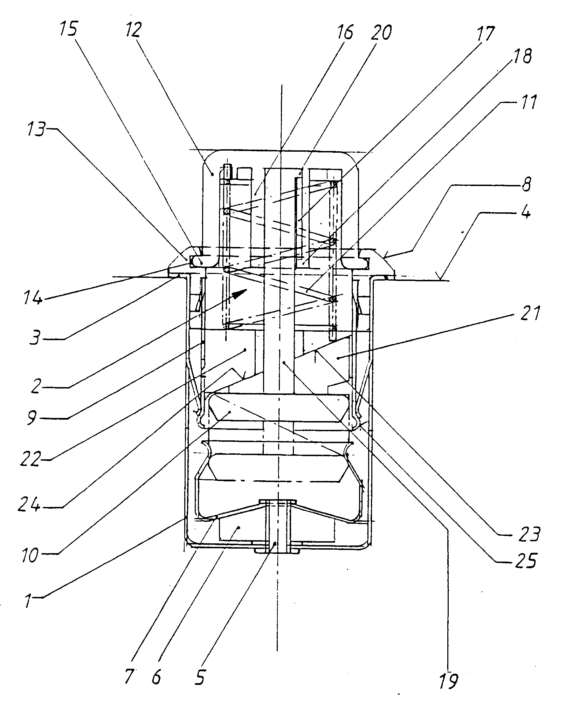

Ein Ausführungsbeispiel der Erfindung wird nachfolgend anhand der Zeichnung näher erläutert.

Die Zeichnung zeigt einen Längsschnitt durch den neuen Zigarettenanzünder mit einem als Hülse 1 ausgebildeten Aufnahmegehäuse, das beispielsweise in einem nicht dargestellten Fahrzeugascher gehalten ist und mit einem in die Hülse 1 einschiebbaren Einsatz 2.

Die Hülse 1 weist öffnungsseitig einen Bund 3 auf, der sich an einer Gehäusewandung 4 des Aschers oder dergleichen abstützt. Bodenseitig trägt die Hülse 1 über einen Niet 5 und einen Isolierkörper 6 eine übliche Bimetallfeder 7.

Der Einsatz 2 besitzt einen mit einem Bund 8 versehenen Zylinder 9, relativ zu dem ein Heizkörper 10 entgegen der Wirkung einer Rückholfeder 11 mittels eines Betätigungsknopfes 12 axial verschiebbar ist.

Der Bund 8 ist durch ein separat gefertigtes und starr mit dem Zylinder 9 verbundenes Ringgehäuse 13 beispielsweise aus Kunststoff gebildet, das eine Ringnut 14 zur drehbeweglichen Lagerung des mit einem Flansch 15 versehenen Betätigungsknopfes 12 aufweist.

Der hutförmig ausgebildete Betätigungsknopf 12 ist mit einer zentrisch angeordneten Lagerbuchse 16 einstückig ausgebildet, die eine axial verlaufende Führungsnut 17 aufweist, welche austrittsseitig durch einen Anschlag 18 begrenzt ist. In die Lagerbuchse 16 greift eine Achse 19 so ein, daß ein daran sitzender Nocken 20 eine Axialführung in der Nut 17 erfährt. Die Achse trägt am freien Ende den Heizkörper 10 und an ihrem Schaft einen daran starr angeordneten Formkörper 21. Ein weiterer Formkörper 22 ist starr im Zylinder 9 befestigt. Die Formkörper 21, 22 liegen mit rampenförmigen Erhöhungen 23 und 24 so aufeinander, daß sich bei einer Drehbewegung des Betätigungsknopfes 12 eine Axialverschiebung der Achse 19 und damit des Heizkörpers 10 gegen die Kraft der Rückholfeder 11 einstellt. Durch eine Axialverschiebung rastet der Heizkörper 10 in herkömmlicher Weise in die entsprechend verkröpften Federarme der Bimetallfeder 7 ein. In der Raststellung wird der Heizkörper 10 mit Strom versorgt, wobei der Stromfluß z.B. vom nicht gezeigten Anschluß über den Niet 5 und die Bimetallfeder 7 zum Heizkörper, der über den Zylinder 9 mit der geerdeten Hülse 1 in elektrisch leitender Verbindung steht, erfolgt. Nach Ablauf der Wirkzeit biegen sich die Arme der Bimetallfeder 7 nach außen und geben den Heizkörper 10 frei, der unter der Wirkung der Rückholfeder 11 aus dem Bereich der Bimetallfeder 7 gelangt.

Bei der Drehbetätigung des Betätigungsknopfes 12 wird ein Mitdrehen des Zylinders 9 dadurch verhindert, daß der Bund 8 des Zylinders 9 mit dem Bund 3 der Hülse 1 formschlüssig, zumindest aber reibschlüssig zusammenwirkt.

Der in der Zeichnung noch dargestellte Außenwulst 25 des Zylinders 9 dient im Zusammenwirken mit nach innen gerichteten Haltearmen der Hülse 1 dazu, den Einsatz 2 in der dargestellten Lage gegen ein ungewolltes Verschieben zu sichern.

## Patentansprüche

1. Zigarettenanzünder, insbesondere für Fahrzeuge, mit einem Einsatz (2) für eine Hülse (1), der einendig einen Betätigungsknopf (12) und anderendig einen Heizkörper (10) aufweist, welcher durch eine Drehbewegung des Betätigungsknopfes (12) in eine Raststellung, in der ein elektrisches Aufheizen desselben erfolgt, überführbar und entgegen der Wirkung einer Rückholfeder (11) durch eine Bimetallfeder (7) während deren Wirkzeit gehalten ist, dadurch gekennzeichnet, daß die Drehbewegung des Betätigungsknopfes (12) auf eine mit diesem drehfest jedoch axial verschiebbar verbundenen, am freien Ende den Heizkörper (10) tragenden Achse (19) übertragbar ist, die ihrerseits mit Mitteln zusammenwirkt, die eine Axialverschiebung der Achse (19) ermöglichen.

2. Zigarettenanzünder nach Anspruch 1, dadurch gekennzeichnet, daß als Mittel zur Axialverschiebung der Achse (19) zwei Formkörper (21, 22) mit aufeinanderliegenden, rampenförmigen Erhöhungen (23, 24) vorgesehen sind, von denen der eine starr mit der Achse (19) und der andere starr mit dem Zylinder (9) verbunden ist.

3. Zigarettenanzünder nach Anspruche 2, dadurch gekennzeichnet, daß der Zylinder (9) in einem den Betätigungsknopf (12) drehbeweglich lagernden Ringgehäuse (13) drehfest angeordnet ist, welches kraft- oder formschlüssig mit einem Bund (3) der Hülse (1) kuppelbar ist.

## Claims

1. A cigarette lighter, especially for vehicles, with an insert (2) for a sleeve (1), which has an actuating knob (12) at one end and a heating element (10) on its other end and which may be transferred to a lock-in position, in which it is electrically heated, by a rotational movement of the actuating knob (12) and is held in that position for the necessary period by a bimetallic spring (7) against the force of a return spring (11), characterised in that the rotational movement of the actuating knob (12) may be transferred to an axle (19) which is connected to the actuating knob (12), and bears the heating element (10) on its free end, in a manner conferring torsional rigidity but allowing axial displacement, said axle (19) for its part acting together with means which enable axial displacement of the axle (19).

2. A cigarette lighter according to Claim 1, characterised in that two moulded bodies (21, 22) with slanted surfaces (23, 24) lying one against the other are provided as the means of axial displacement of the axle (19), one of which is rigidly connected to the axle (19) and the other rigidly connected to the cylinder (9).

3. A cigarette lighter according to Claim 2, characterised in that the cylinder (9) is arranged with torsional rigidity in an annular casing (13) which houses the actuating knob (12) so as to permit its rotation, with said annular casing (13) coupled in a positive locking or non-positive locking manner to a collar (3) of the sleeve (1).

## Revendications

1. Allume-cigare, en particulier pour véhicules automobiles, comportant un insert (2) pour un manchon (1) qui comporte à une extrémité un bouton d'actionnement (12) et à l'autre extrémité, un corps chauffant (10), qui peut être place dans une position encliquetée dans laquelle se produit son chauffage électrique et est maintenu, à l'encontre de l'action d'un ressort de rappel (11), par un ressort à bilame (7), pendant son temps d'action, caractérisé en ce que le mouvement de rotation du bouton d'actionnement (12) peut être transmis à un axe (19) relié solidaire en rotation avec celui-ci, mais déplaçable axialement, portant le corps chauffant (10) à son extrémité libre, cet axe (19) coopérant de son côté avec des moyens qui permettent son déplacement axial.

2. Allume-cigare selon la revendication 1, caractérisé en ce qu'il est prévu comme moyens de déplacement axial de l'axe (19), deux corps façonnés (21, 22) avec des reliefs (21, 24) en forme de rampes, superposés, dont un est relié rigidement avec l'axe (19) et l'autre rigidement avec le cylindre (9).

3. Allume-cigare selon la revendication 2, caractérisé en ce que le cylindre (9) est placé solidaire en rotation dans un boîtier annulaire (13) supportant mobile en rotation le bouton d'actionnement (12), lequel boîtier peut être accouplé par force ou par forme avec un épaulement (3) du manchon (1).
